# EUROPEAN PATENT SPECIFICATION

(11) **EP 2 998 459 B1**
(45) Date of publication and mention of the grant of the patent: **15.08.2018**
(21) Application number: 15185150.8
(22) Date of filing: 15.09.2015
(51) Int. Cl.: E04H 5/02, G21C 13/00, E04B 1/32, E04H 9/06, E04C 3/30, E04C 3/40

(54) **ARCHITECTURAL STRUCTURE**
ARCHITEKTONISCHE STRUKTUR
STRUCTURE ARCHITECTURALE

(30) Priority: 16.09.2014 JP 2014187720
(43) Date of publication of application: 23.03.2016
(73) Proprietor: Shimizu Corporation, Chuo-ku Tokyo 104-8370 (JP); Hitachi-GE Nuclear Energy, Ltd., Ibaraki (JP)
(72) Inventor: NITTA, Yasuo, Chuo-ku, Tokyo (JP); TSUKADA, Takaaki, Chuo-ku, Tokyo (JP); MIURA, Toshio, Chuo-ku, Tokyo (JP); MITSUI, Shigeya, Chuo-ku, Tokyo (JP)
(74) Representative: Gille Hrabal

(56) References cited:
- EP-A2- 0 288 936
- DE-C- 813 077
- GB-A- 191 004 556
- US-A- 2 245 690

## Description

### Background of the Invention

### Technical Field

The present invention relates to an architectural structure.

### Background Art

In recent years, a structure, such as a nuclear power plant or the like, needs to withstand a contingency such as the impact of an aircraft. Hence, Japanese Unexamined Patent Application, First Publication No. 2011-252800 proposes a reactor building that has a building structure constructed with a wall thickness which is able to withstand the impact of an external flying object, and a roof structure constructed on the upper side of the building structure, in which the building structure and the roof structure are separately constructed and have separate foundation structures from each other.

US 2 245 690 A and GB 04556 A A.D. 1910 each show an architectural structure comprising: a building body which has a pair of walls facing each other; and a building roof which covers an upper section of the building body, wherein the building roof includes: a roof supporting section which has a lower chord member that is formed of steel and spans the pair of walls facing each other, an upper chord member that is formed of steel and is arched to connect both end sides of the lower chord member, and a connection post that is formed of steel and connects the lower chord member and the upper chord member, and that is arranged on the building body; and an external roof which is formed of reinforced concrete, and which is inclined upward from the pair of walls sides to a center side between the pair of walls and is arranged so as to cover the roof supporting section.

### Summary of the Invention

For example, in a building having a large span of about 40 m, which is provided with a roof having a slab thickness of about 100 mm, when a thick slab which supports the roof is provided to prepare for a contingency such as the impact of an aircraft, a problem arises in that a significant load is applied to structural members such as a column or a beam which supports the slab.

In addition, in the reactor building disclosed in Japanese Unexamined Patent Application, First Publication No. 2011-252800, since the building structure alone has to withstand the load of the impact of an external flying object, an external wall and the structural members of the building structure need to be strengthened. Hence, a problem arises in that a significant load is applied to the structural members of the building structure.

Taking into account the problems above, the present invention provides an architectural structure which has increased safety and which limits the load on a structural member.

An architectural structure according to the present invention includes: a building body which has a pair of walls facing each other; and a building roof which covers an upper section of the building body, in which the building roof includes a roof supporting section which has a lower chord member that is formed of steel and spans the pair of walls facing each other, an upper chord member that is formed of steel and is arched to connect both ends of the lower chord member, and a connection post that is formed of steel and connects the lower chord member and the upper chord member, and that is arranged on the building body, and an external roof which is formed of reinforced concrete, and which is inclined upward from the pair of walls sides to a center side between the pair of walls and is arranged so as to cover the roof supporting section, whereby the external roof has a gabled shape.

In the architectural structure structured as above, if an aircraft collides with the architectural structure, it is possible for bending stress generated in the external roof to be applied to both the external roof itself and the upper chord member of the roof supporting section which is covered with the external roof. In addition, columns which support both ends of the building roof are likely to be deformed in a direction in which the columns are separated from each other; however, the lower chord member of the roof supporting section maintains the separation. Therefore, it is possible to have a strong structure while limiting the height of the building roof, and it is possible to decrease an amount of the structure because a load on the column or the like, which performs supporting, is decreased. Hence, it is possible to limit the load on a structural member and to achieve increased safety.

In addition, in the architectural structure according to the present invention, the roof supporting section may have a plurality of tied arches which have the lower chord member, the upper chord member, and the connection post, and which are arranged in an extending direction of the pair of walls at intervals and a connection member which connects the plurality of tied arches.

### Brief Description of the Drawings

FIG. 1 is a perspective view of an architectural structure.
FIG. 2 is a sectional elevational view of the architectural structure, showing the roof supporting section of the architectural structure according to the invention.
FIG. 3 is a perspective view of an architectural structure according to an embodiment of the present invention.
FIG. 4 is a perspective view of a further architectural structure.

### Desirable Embodiments

A reactor building is described as an example of an architectural structure according to an embodiment of the present invention.

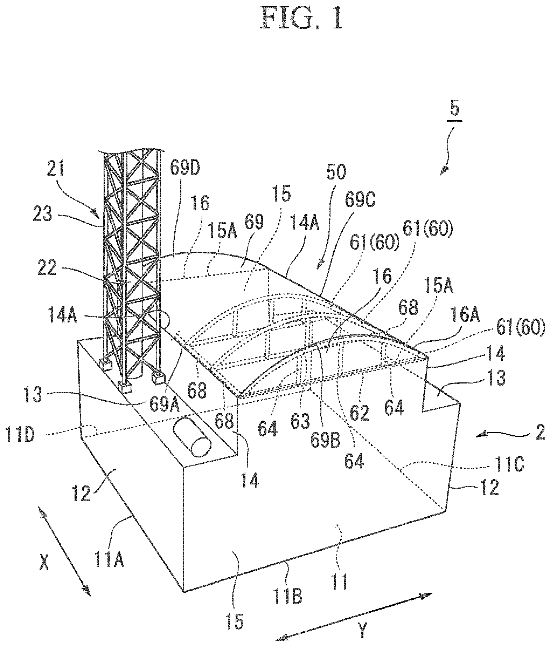

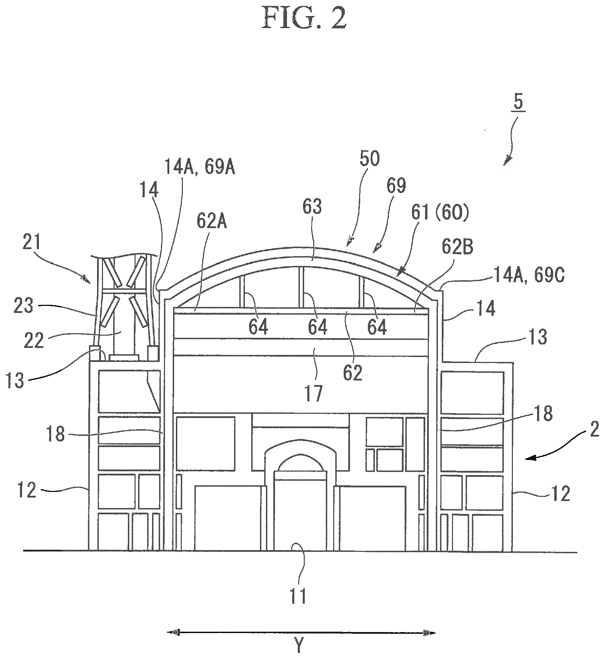

FIG. 1 is a perspective view of a reactor building. FIG. 2 is a sectional elevational view of the reactor building.

As shown in FIGS. 1 and 2, a reactor building 5 includes a building body 2 inside which a containment vessel (not shown) or the like, and an arched roof 50 (building roof) which covers the upper section of the building body 2.

The building body 2 is constructed, for example, using reinforced concrete. The building body 2 has a floor 11 formed to be rectangular in a plan view, first walls 12 which are built upright from respective two facing sides 11A and 11C of the floor 11, step sections 13 formed to be substantially flat from the upper sections of the respective first walls 12, and second walls (wall) 14 which are built upright from end portions of the step sections 13.

The first walls 12, the step sections 13, and the second walls 14 extend in one direction and in a perpendicular direction. The one direction means an X direction.

Further, the building body 2 has side walls 15 which are built upright from the other facing two sides 11B and 11D of the floor 11.

The side walls 15 extend in a direction orthogonal to the X direction and in the perpendicular direction. The direction orthogonal to the X direction means a Y direction.

An exhaust unit 21 extending in the perpendicular direction is provided on the step section 13. The exhaust unit 21 includes an exhaust tower 22 which communicates with the inside of the building body 2 and extends upward, and a steel support tower 23 arranged on the outside of the exhaust tower 22. The exhaust unit 21 may be provided separately from the building body 2.

Upper walls 16 are provided on upper sections 15A of the side walls 15 of the building body 2 to be integral with the side walls 15. An upper section 16A of the upper wall 16 is formed to be curved upward from the second walls 14 to the center between the second walls 14.

As shown in FIG. 2, a plurality of columns 18 are built upright inside the building body 2 in the X direction and the Y direction at intervals. The column 18 reaches the lower section of the arched roof 50. A beam 17 is arranged between the columns 18. The columns 18 are arranged along the second walls 14 on the center side between the second walls 14 in the Y direction and are structurally integral with the second walls 14.

As shown in FIGS. 1 and 2, the arched roof 50 has a roof supporting section 60 which is formed of steel and an external roof 69 which is formed of reinforced concrete and covers the roof supporting section 60.

The roof supporting section 60 has a plurality of tied arches 61 which are formed to have a tied arch shape and are arranged in the longitudinal direction of the first wall 12 of the building body 2 at intervals. The adjacent tied arches 61 are connected with a connection member 68.

The tied arch 61 has a lower chord member 62 which is arrnged to span the columns 18 arranged to be separated in the Y direction, an upper chord member 63 which is arched to connect end portions 62A and 62B of the lower chord member 62, and a plurality of connection posts 64 which connect the lower chord member 62 and the upper chord member 63. The lower chord member 62, the upper chord member 63, and the connection post 64 are each formed of steel.

The lower chord member 62 is arranged substantially horizontally to extend in the Y direction. The end portions 62A and 62B of the lower chord member 62 are joined to the upper portions of the columns 18. That is, the lower chord member 62 is supported on the columns 18 which are structurally integral with the second walls 14.

The upper chord member 63 is formed to have an arc shape gradually upward from the end portions 62A and 62B of the lower chord member 62 in the Y direction to the center between the end portions 62A and 62B.

The connection post 64 connects the lower chord member 62 and the upper chord member 63 substantially in the perpendicular direction. The plurality of connection posts 64 are arranged to be separated from one another in an extending direction (Y direction) of the lower chord member 62.

The external roof 69 is constructed using reinforced concrete in an arched shape. In other words, the external roof 69 is formed to be curved upward from the second walls 14 to the center between the second walls 14. In the present embodiment, it is possible to minimize damage to the external roof 69 by forming it of reinforced concrete with a thickness of 1.3 m.

End portions 69A and 69C of the external roof 69 in the Y direction are joined to upper sections 14A of the second walls 14. In addition, end portions 69B and 69D of the external roof 69 in the X direction are joined to the upper sections 16A of the upper walls 16.

The roof supporting section 60 and the external roof 69 are joined using a stud bolt, a bolt and nut (not shown), or the like.

In the reactor building 5 structured as above, if an aircraft collides with the building, it is possible for bending stress generated in the external roof 69 to be applied to both the external roof 69 itself and the upper chord member 63 of the roof supporting section 60 which is covered with the external roof 69. In addition, columns 18 which support both ends of the arched roof 50 are likely to be deformed in a direction in which the columns are separated from each other; however, the lower chord member 62 of the roof supporting section 60 maintains the separation. Therefore, it is possible to have a strong structure while limiting the height of the arched roof 50, and it is possible to decrease the amount of the structure because a load on the column 18 or the like, which performs support, is decreased. Hence, it is possible to limit the load on the structural member and to achieve increased safety.

In addition, since the external roof 69 constructed in the arch can resist a self-load or an external force with the three-dimensional rigidity of the external roof 69 itself, it is possible to decrease the amount of the structure of the external roof 69.

In addition, in construction of the arched roof 50, the roof supporting section 60 is constructed using steel and then, the external roof 69 is constructed using reinforced concrete. Accordingly, since the roof supporting section 60 plays a role in supporting the reinforced concrete forming the external roof 69 when the external roof 69 is constructed, there is no need to provide a member, such as a prop, which supports the reinforced concrete.

### Modified example 1

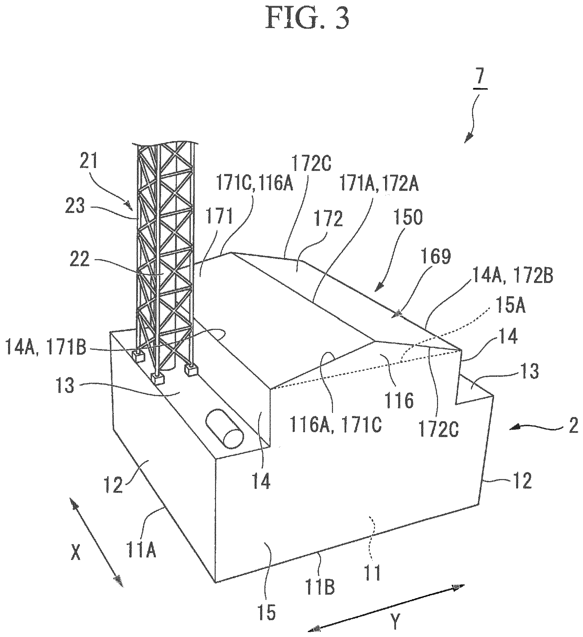

The modified example 1 of the arrangement described above is described mainly with reference to FIG. 3.

FIG. 3 is a perspective view of an architectural structure according to an embodiment of the present invention.

In the following modified examples, the same reference sign is assigned to the same member as the member used in the embodiment described above and a repeated description thereof is omitted.

As shown in FIG. 3, a reactor building 7 includes a building body 2 having a shape of the roof, which is different from that in the embodiment described above, and a gabled roof 150 (building roof).

Upper walls 116 are provided on the upper sections 15A of the side walls 15 of the building body 2. An upper section 116A of the upper wall 116 is gradually inclined upward from the second walls 14 to the center between the second walls 14.

The gabled roof 150 has the roof supporting section 60 (refer to FIG. 2) which is formed of steel, and an external roof 169 which is formed of reinforced concrete and covers the roof supporting section 60.

The external roof 169 has a pair of panel-shaped roof panels 171 and 172. The roof panel 171 is arranged so as to be gradually inclined upward from one second wall 14 to the center between the second walls 14. The roof panel 172 is arranged so as to be gradually inclined upward from the other second wall 14 to the center between the second walls 14.

End sections 171A and 172A of the roof panels 171 and 172 on the center side between the second walls 14 are joined to each other. In addition, end sections 171B of the roof panels 171 and 172 on sides of the second walls 14 are joined to the upper sections 14A of the second walls 14. Both end sections 171C of the roof panel 171 in the longitudinal direction (X direction) of the second wall 14 are joined to the upper sections 116A of the upper walls 116. Both end sections 172C of the roof panel 172 in the longitudinal direction (X direction) of the second wall 14 are joined to the upper sections 116A of the upper walls 11. In this manner, a roof having the gabled shape is constructed of the pair of roof panels 171 and 172.

### Modified example 2

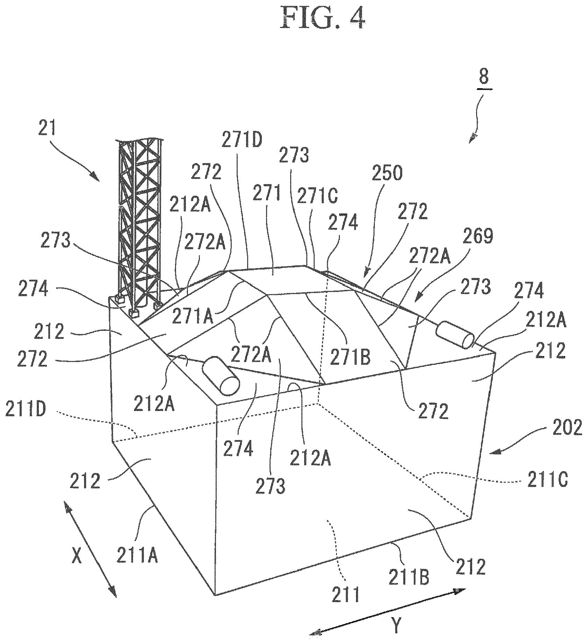

The modified example 2 of the embodiment described above is described mainly with reference to FIG. 4.

FIG. 4 is a perspective view of an architectural structure according to the modified example 2, which does not fall within the scope of the appended claims. As shown in FIG. 4, a reactor building 8 includes a building body 202 having a shape of the roof, which is different from those described above, and an inclined roof 250 (building roof).

The building body 202 has a floor 211 formed to be rectangular in a plan view, and four walls 212 which are built upright from four sides 211A, 211B, 211C, and 211D of the floor 211.

The inclined roof 250 has a roof supporting section (not shown) which is formed of steel, and an external roof 269 which is formed of reinforced concrete and covers the roof supporting section.

The external roof 269 is formed to be inclined upward from the walls 212 side to the center between the walls 212. The external roof 269 has a center panel 271, inclined panels 272, triangular panels 273, and corner panels 274, which are formed in a panel shape.

The center panel 271 is rectangular in a plan view and is arranged at the center of a space surrounded by the four walls 212 in plan view.

The inclined panels 272 are rectangular in a plan view and are arranged so as to be gradually inclined downward from four sides 271A, 271B, 271C, and 271D of the center panel to the walls 212 corresponding thereto.

The triangular panel 273 is triangular in a plan view and is joined to the side 272A of the inclined panel 272, which is gradually inclined downward to be separated from the center panel 271. That is, the triangular panel 273 is arranged connecting the adjacent inclined panels 272. The triangular panel 273 is arranged so as to be gradually inclined downward from the center panel 271 side to the wall 212 side.

The corner panel 274 is triangular in a plan view and is arranged laying flat and connecting the triangular panel 273 and the upper sections 212A of the adjacent walls 212.

In a portion in which the inclined panel 272, the center panel 271, and the inclined panel 272 are arranged in the Y direction, the roof supporting section is arranged in the same way as in the embodiment described above. That is, the upper chord member has end portions joined to the end portions of the lower chord member and is formed to be arched.

Meanwhile, in a portion in which the corner panel 274, the triangular panel 273, the inclined panel 272, the triangular panel 273, and the corner panel 274 are arranged in the Y direction, the lower chord member 62 (refer to FIG. 1) of the roof supporting section spans the walls 212 facing in the Y direction. The upper chord member of the roof supporting section is arranged on the lower side of the triangular panel 273 and the inclined panel 274. That is, the upper chord member has end portions joined to intermediate portions (end portion sides of the lower chord member) of the lower chord member in the Y direction and is formed to be arched.

In the arrangement described above, the newly built reactor building 5 is described; however, the present invention is not limited thereto. For example, the present invention can also be applied to a case of modification in which, in an existing reactor building which is provided with a flat roof on the upper section of the second wall 14 and the side wall 15, the flat roof is removed and a new arched roof 50 is provided.

In this case, since the end sections of the arched roof 50 are joined to the upper sections 14A of the second walls 14 and the upper sections 16A of the upper walls 16, the arched roof 50 does not project from the second walls 14 and side walls 15. Accordingly, even when existing equipment such as the exhaust unit 21 on the step section 13 is provided in the existing reactor building, it is possible to perform repairs without changing the position of the unit.

In addition, since it is possible to perform repairs using the second wall 14 and the side wall 15 of the existing reactor building as they are, it is possible to limit an increase in building volume by changing the framing.

As above, examples preferable for the present invention have been described; however, the present invention is not limited thereto. It is possible to perform addition, omission, replacement, and other modifications of a structure in a range which does not depart from the scope of the present invention. The present invention is not limited to the above description, and is limited only by the scope of the attached claims.

## Claims

1. An architectural structure (5) comprising:
a building body (2) which has a pair of walls (14) facing each other; and
a building roof (50) which covers an upper section of the building body (2),
wherein the building roof (50) includes:
a roof supporting section (60) which has a lower chord member (62) that is formed of steel and spans the pair of walls (14) facing each other, an upper chord member (63) that is formed of steel and is arched to connect both end sides of the lower chord member (62), and a connection post (64) that is formed of steel and connects the lower chord member (62) and the upper chord member (63), and that is arranged on the building body (2); and
an external roof (69) which is formed of reinforced concrete, and which is inclined upward from the pair of walls (14) sides to a center side between the pair of walls (14) and is arranged so as to cover the roof supporting section (60),
**characterized in that**
the external roof (69) has a gabled shape.

2. The architectural structure (5) according to Claim 1,
wherein the roof supporting section (60) has
a plurality of tied arches (61) which have the lower chord member (62), the upper chord member (63), and the connection post (64), and which are arranged in an extending direction of the pair of walls (14) at intervals, and
a connection member (68) which connects the plurality of tied arches (61).

## Patentansprüche

1. Architektonische Struktur (5), umfassend:
einen Gebäudekörper (2), der ein Paar einander zugewandter Wände (14) aufweist; und
ein Gebäudedach (50), das einen oberen Abschnitt des Gebäudekörpers (2) abdeckt,
wobei das Gebäudedach (50) umfasst:
einen Dachstützabschnitt (60) mit einem Unterzugelement (62), das aus Stahl gebildet ist und das Paar einander zugewandter Wände (14) überspannt, ein Oberzugelement (63), das aus Stahl gebildet ist und gewölbt ist, um beide Endseiten des Unterzugelements (62) zu verbinden, und einen Verbindungspfosten (64), der aus Stahl gebildet ist und das Unterzugelement (62) und das Oberzugelement (63) verbindet und der an dem Gebäudekörper (2) angeordnet ist; und
ein Außendach (69), das aus Stahlbeton gebildet ist, und das von den Seiten des Paares der Wände (14) zu einer Mittelseite zwischen dem Paar Wände (14) nach oben geneigt ist und so angeordnet ist, dass es den Dachstützabschnitt (60) abdeckt,
**dadurch gekennzeichnet, dass**
das Außendach (69) eine Sattelform hat.

2. Architektonische Struktur (5) nach Anspruch 1,
wobei der Dachstützabschnitt (60) umfasst
eine Vielzahl von Stabbögen (61), die das Unterzugelement (62), das Oberzugelement (63) und den Verbindungspfosten (64) aufweisen und die in einer sich erstreckenden Richtung des Paares der Wände (14) in Abständen angeordnet sind, und
ein Verbindungselement (68), das die Vielzahl von Stabbögen (61) verbindet.

## Revendications

1. Structure architecturale (5) comprenant :
un corps de bâtiment (2), qui comprend une paire de parois (14) se faisant face l'une à l'autre ; et
un toit de bâtiment (50), qui couvre une partie supérieure du corps de bâtiment (2),
dans laquelle le toit de bâtiment (50) comprend :
une section soutenant le toit (60), qui a un membre de corde inférieur (62) qui est fabriqué en acier et enjambe la paire de parois (14) se faisant face l'une à l'autre, un membre de corde supérieur (63) qui est fabriqué en acier et qui est cintré pour relier les deux côtés d'extrémité du membre de corde inférieur (62) et un poste de liaison (64) qui est fabriqué en acier et relie le membre de corde inférieur (62) au membre de corde supérieur (63) et qui est disposé sur le corps de bâtiment (2), et un toit extérieur(69), qui est fabriqué en béton renforcé et qui est incliné vers le haut à partir des côtés de la paire de parois (14) vers un côté central entre la paire de parois (14) et qui est disposé de sorte qu'il couvre la section soutenant le toit (60),
**caractérisée en ce que**
le toit extérieur (69) a une forme de toit à deux versants.

2. Structure architecturale (5) selon la revendication 1,
dans laquelle la section soutenant le toit (60) comprend
une pluralité d'arcs attachés (61) qui comprennent le membre de corde inférieur (62), le membre de corde supérieur (63) et le poste de liaison (64), et qui sont disposés dans une direction d'extension de la paire de parois (14) à des intervalles, et
un membre de liaison (68), qui relie la pluralité d'arc attachés (61).
